# EUROPEAN PATENT SPECIFICATION

(11) **EP 1 919 053 B1**
(45) Date of publication and mention of the grant of the patent: **03.12.2014**
(21) Application number: 07006372.2
(22) Date of filing: 28.03.2007
(51) Int. Cl.: H02H 3/093, H02H 3/04

(54) **State monitoring device for circuit breaker**
Statusüberwachungsvorrichtung für Schutzschalter
Dispositif de surveillance d'état pour disjoncteur

(30) Priority: 02.11.2006 JP 2006298969
(43) Date of publication of application: 07.05.2008
(73) Proprietor: MITSUBISHI ELECTRIC CORPORATION, Chiyoda-ku Tokyo 100-8310 (JP)
(72) Inventor: Fushimi, Masahiro, Tokyo 100-8310 (JP); Nomura, Toshimitsu, Tokyo 100-8310 (JP)
(74) Representative: Hoffmann Eitle

(56) References cited:
- JP-A- H07 161 277
- JP-A- 2002 245 903
- US-A- 5 166 854
- US-A- 5 825 599

## Description

### BACKGROUND OF THE INVENTION

### 1. Field of the Invention

The invention relates to a circuit breaker comprising a state monitoring device that monitors abnormalities in the operation state of a low voltage circuit breaker such as a molded case circuit breaker and a ground fault circuit interrupter.

### 2. Description of the Related Art

The circuit breaker has not only a switching function to open and close an electric path in response to the operation of an operation handle provided at the circuit breaker but also a function to interrupt an electric path in order to prevent an electric wiring or load equipment from being burnt by passage of excess current, which is an important role. It is well known that in the electric path interruption, for example a thermal or electromagnetic tripping device responds to excess current to operate an opening/closing mechanism. A known so-called current limiting type circuit breaker takes advantage of electromagnetic repulsive force generated between a fixed contact and a movable contact in the circuit breaker caused by excess current to open the movable contact at high speed if the excess current is significantly large current.

With the circuit breaker having such a current limiting structure, the large excess current itself is limited or reduced while not a little damage is caused at the main contact. Therefore, as disclosed by JP-A-2002-245903, it is known that for example in a high voltage high speed breaker for use in a rolling stock, every time large current is interrupted, the history is stored, and once the number of times reaches a certain level, the main contact in the circuit breaker is replaced.

When the technique disclosed by JP-A-2002-245903 is applied to a low voltage circuit breaker such as a molded case circuit breaker and a ground fault circuit interrupter, whether or not large current has been interrupted can be determined, but it cannot be determined whether the interruption itself is successful. More specifically, in the circuit breaker having the above-described current limiting structure, a movable contact opened in advance by electromagnetic repulsive force should be kept in the opened position by the operation of the opening/closing mechanism, but the tripping device that causes the opening/closing mechanism to operate may not operate if for example the tripping device is provided with a time delay or if the current waveform has a short time width such as surge current. Therefore, the degree of how much the contact is worn when once almost open movable contact is closed again is much noticed but the breaker must continue to be used while normal current passage is not secured because of temperature rise between the contacts. It is highly possible that the contacts may be welded when they are closed again. In such a case, the user may continue use the device without knowing the welded state itself.

US-A-5,825,599, agonist which the preamble is based on, discloses a ground fault circuit interrupt system with uncommitted contacts is provided which includes line-side system, phase, neutral and ground terminals electrically connectable to phase, neutral and ground terminals of an AC power source and load-side system, phase, neutral and ground terminals electrically connectable, respectively, to phase, neutral and ground terminals of an electrical load. The system includes a ground fault circuit interrupter including line- and load-side phase and neutral terminals for electrical connection to the line-side system, phase and neutral terminals for controlling a state of conduction of AC current between the source and electrical load in accordance with a detection of an interrupt condition. A relay switch is also included which has a relay coil and phase and neutral contacts such that line and load ends of the phase contact are electrically connected, respectively, to a GFCI load-side phase terminals and load-side system, phase terminal, line and load ends of the neutral contact are electrically connected, respectively, to a GFCI load-side neutral terminal and load-side system, neutral terminal; and the relay coil is electrically coupled between the load ends of the phase and neutral contacts for controlling said contacts in response to the interrupt condition.

### SUMMARY OF THE INVENTION

The invention is directed to a solution to the above-described disadvantage and it is an object of the invention to provide a circuit breaker capable of notifying that the opening/closing mechanism does not operate though the movable contact is opened by electromagnetic repulsive force, in other words, though the current passed therethrough has reached a level at which the circuit breaker is allowed to carry out tripping operation.

The present invention provides a circuit breaker according to Claim 1.

The state monitoring device for a circuit breaker can surely detect an abnormality in the operation state of the circuit breaker and can immediately determine an abnormality such as re-closing of the main contact. Therefore, the user can be advised to replace the circuit breaker as required, so that power supply to the load can stably be maintained.

### BRIEF DESCRIPTION OF THE DRAWINGS

Fig. 1 is a circuit diagram of a first embodiment of the invention;
Fig. 2 is a circuit diagram of a second embodiment of the invention; and
Fig. 3 is a circuit diagram of a third embodiment of the invention.

### DETAILED DESCRIPTION OF THE PREFERRED EMBODIMENTS

### First Embodiment

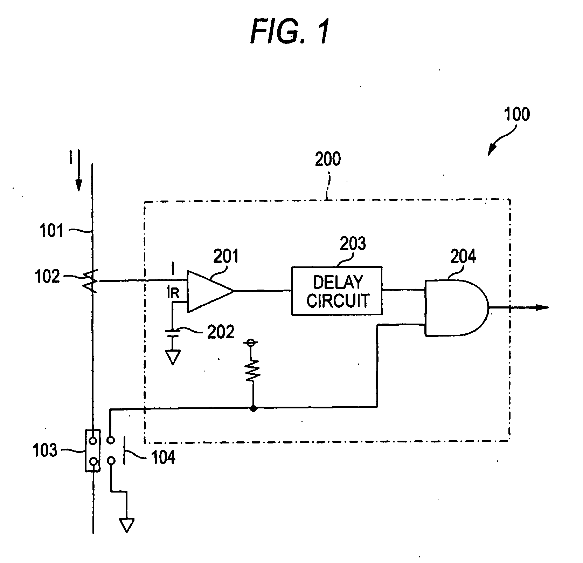

Fig. 1 is a circuit diagram of a circuit breaker comprising a state monitoring device according to a first embodiment of the invention. In Fig. 1, the circuit breaker 100 includes a current detector 102 that detects current passed through an electric path 101, a main contact 103 that interrupts the passed current if the passed current is at a prescribed value or higher, and an auxiliary switch 104 that detects a tripping state in association with the main contact 103. The circuit breaker 100 includes a state monitoring device 200 that monitors the operation state of the circuit breaker and outputs a warning signal in response to an abnormality in the operation state.

In the state monitoring device 200, an excess current detecting comparator 201 compares a passage current value I detected by the current detector 102 and a reference current I_{R} set by a current setter 202, i.e., the value of current at which tripping operation is initiated by electromagnetic repulsive force generated between the fixed contact and the movable contact forming the main contact 103 and an output is generated if the passage current value I is greater than the reference current I_{R}.

The output signal of the excess current detecting comparator 201 is input to one input terminal of an AND circuit 204 through a delay circuit 203. A signal from the auxiliary switch 104 that detects the tripping state of the circuit breaker is input to the other input terminal of the AND circuit 204, and an output signal is generated from the AND circuit 204, provided that the passed current value I is greater than the reference current value I_{R} and the auxiliary switch 104 does not detect a tripping state. Note that the delay circuit 203 delays the output of the excess current detecting comparator 201 by a signal delay from the auxiliary switch 104.

Based on the output of the AND circuit 204, the state monitoring device for a circuit breaker having this structure can surely detect the abnormal state of the circuit breaker in which the circuit breaker is not in a tripping state though the passage current value I is greater than the reference current value I_{R} and electromagnetic repulsive force acts on the movable contact of the circuit breaker.

Note that in the above description, the auxiliary switch 104 detects the tripping state of the circuit breaker, while using the auxiliary switch that detects the opened/closed state of the main contact 103, a similar signal can be output if the circuit breaker is in an on state and the tripping device operates, and therefore the same effect can be brought about.

### Second Embodiment

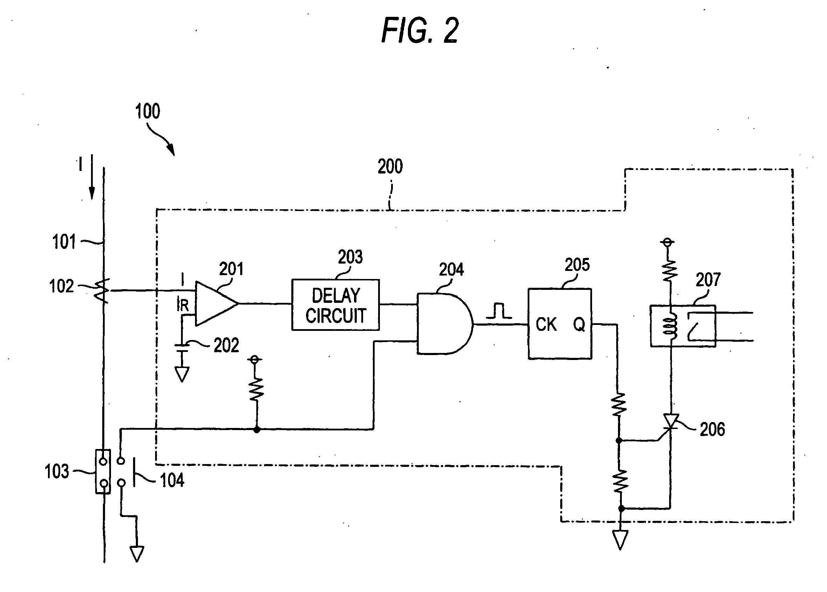

Fig. 2 is a circuit diagram of a second embodiment of the invention. The configuration shown in Fig. 2 is the same as that of the first embodiment as far as the AND circuit 204.

According to the second embodiment, a counter 205 counts the number of how many times the output signal of the AND circuit 204 is generated, in other words, the number of generated signals indicating the state in which the circuit breaker is not in a tripping state though the passage current value I is greater than the reference current value I_{R} and electromagnetic repulsive force acts on the movable contact of the circuit breaker. The counter 205 stores a number at which the wearing of the main contact 103 reaches a prescribed value, outputs a signal when the number is reached, and turns on a thyristor 206, so that a warning signal is output from a relay 207. Note that the relay 207 may be replaced by another kind of means such as an LED that informs about the wearing out of the contact.

The state monitoring device for the circuit breaker having the structure can surely monitor the wearing state of the main contact 103 and the user can be advised to replace the circuit breaker as required.

### Third Embodiment

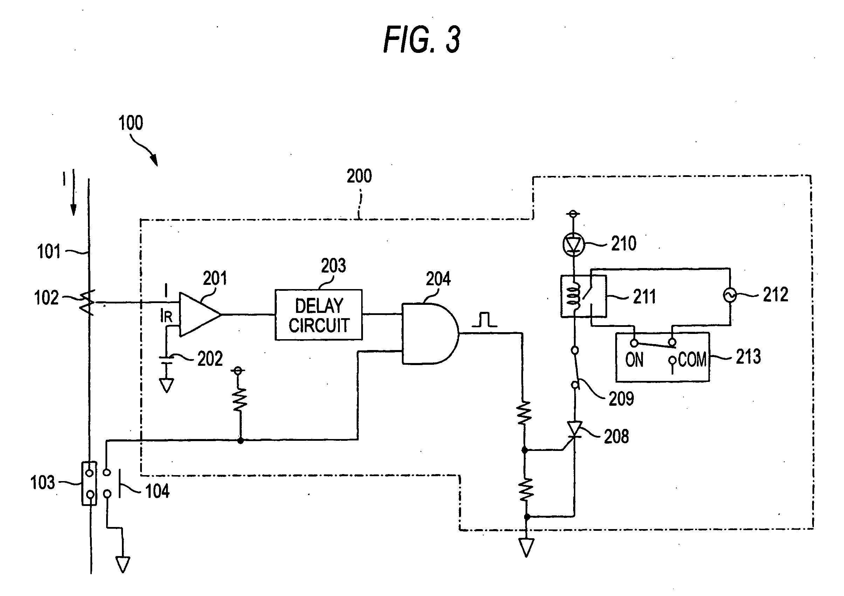

Fig. 3 is a circuit diagram of a third embodiment of the invention. The configuration shown in Fig. 3 is the same as that of the first embodiment as far as the AND circuit 204.

According to the third embodiment, if the signal of the AND circuit 204 is output, in other words, if the signal indicating the state in which the circuit breaker is not in a tripping state though the passage current value I is greater than the reference current value I_{R} and electromagnetic repulsive force acts on the movable contact is output, a thyristor 208 is turned on to generate an output from a relay 211, so that an electrical operationdevice 213 that electrically opens/closes the circuit breaker by a power supply 212 opens and then closes the circuit breaker.

In this example, if contact welding is generated at the main contact 103, the circuit breaker cannot be opened, an auxiliary switch 209 that detects the opened/closed state of the circuit breaker is therefore kept closed, and an LED 210 continues to emit light. Note that the means for informing about such contact welding may be another kind of means such as a relay instead of the LED 210.

The state monitoring device for the circuit breaker having the structure can surely monitor the welded state of the main contact 103 and the user can be advised to replace the circuit breaker as required.

## Claims

1. A circuit breaker comprising:
a current detector (102) arranged to detect current passed through an electric path (101);
a main contact (103) arranged to interrupt the passed current when the passed current reaches at least a prescribed value; and
an auxiliary switch (104) arranged to detect the opened/closed state of the main contact (103),
wherein, the main contact (103) comprises a fixed contact and a moveable contact, the moveable contact arranged to carry out an opening operation by electromagnetic repulsive force generated by the current passed through the main contact (103) between the fixed contact and the moveable contact; and
a state monitoring device (200) for monitoring the operation state of the circuit breaker (100) and notifying that an opening/closing mechanism of the circuit breaker does not operate,
**characterized in that**
said state monitoring device (200) comprising:
comparison means (201) for comparing the value of passed current obtained from the current detector (102) and a reference current value at which the opening operation of the movable contact is started by the electromagnetic repulsive force and for generating an output if the value of the passed current is at least the reference current value; and
warning signal output means (204) for outputting a warning signal if the value of the passed current exceeds a level at which the circuit breaker (100) is allowed to carry out tripping operation and if a signal obtained from the auxiliary switch (104) continues to indicate the closed state of the main contact (103), the warning signal output means (204) basing its output on the output signal of the comparison means (201) and the signal obtained from the auxiliary switch (104).

2. The circuit breaker according to claim 1, wherein the warning signal output means is further arranged to count the number of times the warning signal is generated.

3. The circuit breaker according to claim 1, wherein the warning signal output means is arranged to output the warning signal as an opening operation signal for an electrical operation device (213) that electrically carries out the opening/closing operation of the circuit breaker (100).

## Patentansprüche

1. Schutzschalter, umfassend:
einen Stromdetektor (102), der zum Feststellen eines Stroms ausgelegt ist, der über einen Stromweg (101) geleitet wird;
einen Hauptkontakt (103), der zum Unterbrechen des durchgeleiteten Stroms ausgelegt ist, wenn der durchgeleitete Strom zumindest einen vorgegebenen Wert erreicht; und
einen Hilfsschalter (104), der zum Feststellen des offenen/geschlossenen Zustandes des Hauptkontaktes (103) ausgelegt ist,
wobei der Hauptkontakt (103) einen festen Kontakt und einen beweglichen Kontakt umfasst, der bewegliche Kontakt zum Ausführen einer Öffnungsoperation durch elektromagnetische Abstoßungskraft ausgelegt ist, die durch den Strom erzeugt wird, der durch den Hauptkontakt (103) zwischen dem festen Kontakt und dem beweglichen Kontakt geleitet wird; und
eine Statusüberwachungsvorrichtung (200) zum Überwachen des Betriebszustandes des Leistungsschalters (100) und zum Benachrichtigen, dass ein Öffnungs-/Schließmechanismus des Leistungsschalters nicht arbeitet,
**dadurch gekennzeichnet, dass**
die Statusüberwachungsvorrichtung (200) Folgendes umfasst:
ein Vergleichsmittel (201) zum Vergleichen des Wertes des durchgeleiteten Stroms, der aus dem Stromdetektor (102) erhalten wird, mit einem Referenzstromwert, bei dem die Öffnungsoperation des beweglichen Kontaktes durch die elektromagnetische Abstoßungskraft eingeleitet wird, und zum Erzeugen einer Ausgabe, wenn der Wert des durchgeleiteten Stroms zumindest der Referenzstromwert ist; und
ein Warnsignalausgabemittel (204), das ein Warnsignal ausgibt, wenn der Wert des durchgeleiteten Stroms ein Niveau übersteigt, bei dem der Leistungsschalter (100) eine Auslöseoperation ausführen darf, und falls ein Signal, das vom Hilfsschalter (104) erhalten wird, weiter den geschlossenen Zustand des Hauptkontaktes (103) anzeigt, das Warnsignalausgabemittel (204) seine Ausgabe auf das Ausgabesignal des Vergleichsmittels (201) und auf das Signal, das vom Hilfsschalter (104) erhalten wird, gründet.

2. Schutzschalter nach Anspruch 1, wobei das Warnsignalausgabemittel ferner dafür ausgelegt ist, die Anzahl zu zählen, wie oft das Warnsignal erzeugt wird.

3. Schutzschalter nach Anspruch 1, wobei das Warnsignalausgabemittel dafür ausgelegt ist, das Warnsignal als Öffnungsoperationssignal für eine elektrische Betriebsvorrichtung (213) auszugeben, welche die Öffnungs-/Schließoperation des Schutzschalters (100) elektrisch ausführt.

## Revendications

1. Disjoncteur comprenant :
un détecteur de courant (102) agencé pour détecter un courant passé à travers un chemin électrique (101) ;
un contact principal (103) agencé pour interrompre le courant passé lorsque le courant passé atteint au moins une valeur prescrite ; et
un commutateur auxiliaire (104) agencé pour détecter l'état ouvert/fermé du contact principal (103),
dans lequel, le contact principal (103) comprend un contact fixe et un contact mobile, le contact mobile agencé pour effectuer une opération d'ouverture par une force de répulsion électromagnétique générée par le courant passé à travers le contact principal (103) entre le contact fixe et le contact mobile ; et
un dispositif de surveillance d'état (200) pour surveiller l'état de fonctionnement du disjoncteur (100) et notifier qu'un mécanisme d'ouverture/fermeture du disjoncteur ne fonctionne pas,
**caractérisé en ce que** ledit dispositif de surveillance d'état (200) comprend :
des moyens de comparaison (201) pour comparer la valeur de courant passé obtenue à partir du détecteur de courant (102) et une valeur de courant de référence à laquelle l'opération d'ouverture du contact mobile est démarrée par la force de répulsion électromagnétique et pour générer une sortie si la valeur du courant passé est au moins la valeur de courant de référence ; et
des moyens de sortie de signal d'avertissement (204) pour sortir un signal d'avertissement si la valeur du courant passé dépasse un niveau auquel le disjoncteur (100) est autorisé à effectuer une opération de déclenchement et si un signal obtenu à partir du commutateur auxiliaire (104) continue d'indiquer l'état fermé du contact principal (103), les moyens de sortie de signal d'avertissement (204) basant leur sortie sur le signal de sortie des moyens de comparaison (201) et le signal obtenu à partir du commutateur auxiliaire (104).

2. Disjoncteur selon la revendication 1, dans lequel les moyens de sortie de signal d'avertissement sont en outre agencés pour compter le nombre de fois que le signal d'avertissement est généré.

3. Disjoncteur selon la revendication 1, dans lequel les moyens de sortie de signal d'avertissement sont agencés pour sortir le signal d'avertissement comme un signal d'opération d'ouverture pour un dispositif d'opération électrique (213) qui effectue électriquement l'opération d'ouverture/fermeture du disjoncteur (100).
